# EUROPEAN PATENT SPECIFICATION

(11) **EP 4 407 729 B1**
(45) Date of publication and mention of the grant of the patent: **08.07.2026**
(21) Application number: 23215064.9
(22) Date of filing: 07.12.2023
(51) Int. Cl.: H01M 10/04, H01M 10/0562, H01M 10/48

(54) **BATTERY SYSTEM**
BATTERIESYSTEM
SYSTÈME DE BATTERIE

(30) Priority: 24.01.2023 JP 2023008609
(43) Date of publication of application: 31.07.2024
(60) Divisional application: 25172025.6
(73) Proprietor: TOYOTA JIDOSHA KABUSHIKI KAISHA, Toyota-shi, Aichi-ken, 471-8571 (JP)
(72) Inventor: HAGIWARA, Hideki, Aichi-ken, 471-8571 (JP); NAGASE, Hiroshi, Aichi-ken, 471-8571 (JP); OGUMA, Yasumasa, Aichi-ken, 471-8571 (JP); YOSHIDA, Jun, Aichi-ken, 471-8571 (JP); MIGITA, Tsubasa, Aichi-ken, 471-8571 (JP); UCHIDA, Yoshihiro, Aichi-ken, 471-8571 (JP)
(74) Representative: D Young & Co LLP

(56) References cited:
- EP-A1- 3 886 202
- JP-A- 2006 269 345
- JP-A- 2022 014 295
- JP-A- 2022 046 077
- US-B2- 8 679 664
- US-B2- 8 917 095

## Description

### BACKGROUND OF THE INVENTION

### 1. Field of the Invention

The present disclosure relates to battery systems.

### 2. Description of Related Art

Japanese Unexamined Patent Application Publication No. 2022-46077 (JP 2022-46077 A) discloses a battery system that cools a secondary battery with a cooler when generation of hydrogen sulfide is predicted or detected in the secondary battery using a sulfur-based material for at least one of the positive electrode and the solid electrolyte.

In JP 2022-46077 A, by detecting pressure in a battery case containing the secondary battery or hydrogen sulfide concentration (sulfur concentration) in the battery case, hydrogen sulfide gas that has been generated from the secondary battery is detected.

### SUMMARY OF THE INVENTION

In the configuration of JP 2022-46077 A, generation of hydrogen sulfide gas cannot be detected, until the hydrogen sulfide gas generated from the secondary battery fills the battery case, and pressure in the battery case rises, or until hydrogen sulfide concentration in the battery case increases.

The present disclosure makes it possible to detect the generation of hydrogen sulfide before the hydrogen sulfide gas fills the battery case.

The battery system of the present disclosure includes a unit cell that is a sulfide-based all-solid-state battery, a battery module in which a plurality of the unit cells is stacked between a pair of restraining members, an intermediate plate disposed between the stacked unit cells, a detection unit configured to detect a load applied to the intermediate plate, and an estimation unit configured to estimate generation of hydrogen sulfide in the unit cell based on a change in the load applied to the intermediate plate.

In this configuration, the unit cell is constituted of a sulfide-based all-solid-state battery. In the present disclosure, the sulfide-based all-solid-state battery contains a sulfur component in at least one of the positive electrode material and the solid electrolyte material. The unit cells constitute the battery module by being stacked between the pair of restraining members. The intermediate plate is disposed between the stacked unit cells. The detection unit detects the load applied to the intermediate plate. When the hydrogen sulfide gas is generated inside the unit cell, internal pressure of the unit cell increases, and a volume of the unit cell increases. As the volume of the unit cell increases, the load applied to the intermediate plate changes. The estimation unit estimates the generation of hydrogen sulfide in the unit cell based on the change in the load applied to the intermediate plate. Since the estimation unit estimates the generation of hydrogen sulfide in the unit cell based on the change in the load applied to the intermediate plate, the battery system will be able to detect the generation of hydrogen sulfide before the battery case is filled with hydrogen sulfide gas.

The intermediate plate may be fixed to a base member in a cantilevered state. The restraining members are fixed to the base member. The detection unit may be a strain gauge provided on the intermediate plate.

In this configuration, the intermediate plate is fixed to the base member in a cantilevered state, the restraining members being fixed to the base member. Therefore, when the hydrogen sulfide gas is generated inside any one of the unit cells and the volume of the unit cell increases, the load applied to the intermediate plate changes and the intermediate plate bends with the fixed end as a support point. By detecting this bending with the strain gauge provided on the intermediate plate, the battery system can estimate the generation of hydrogen sulfide in the unit cell.

The estimation unit may be configured to determine a direction of a bending strain detected by the strain gauge. The estimation unit, based on a relationship between the direction of the bending strain and a position of the intermediate plate in a stacking direction of the unit cells, may be configured to identify an arrangement position of the unit cell where hydrogen sulfide is generated.

The intermediate plate may be configured to be displaced in a stacking direction of the unit cells. The detection unit may be a sensor configured to detect displacement of the intermediate plate.

In this configuration, the intermediate plate is displaceable in the stacking direction of the unit cells. Therefore, when the hydrogen sulfide gas is generated inside any one of the unit cells and the volume of the unit cell increases, the load applied to the intermediate plate changes, and the intermediate plate displaces (or moves) in the stacking direction. By detecting this displacement with a sensor, a battery system can estimate the generation of hydrogen sulfide in the unit cell.

The estimation unit may be configured to determine a direction of the displacement of the intermediate plate detected by the sensor. The estimation unit, based on a relationship between the direction of the displacement of the intermediate plate and a position of the intermediate plate in the stacking direction of the unit cells, may be configured to identify an arrangement position of the unit cell where hydrogen sulfide is generated.

The unit cell may be a laminated all-solid-state battery including a laminate film as an exterior member.

In this configuration, the unit cell is the laminated all-solid-state battery, and the exterior member is constituted of the laminate film. The laminate film is more flexible than a metal case that constitutes a rectangular battery and the like. Therefore, when the internal pressure of the unit cell increases, the volume of the unit cell increases relatively easily. Therefore, the battery system can relatively accurately estimate the generation of hydrogen sulfide in the unit cell based on the change in the load applied to the intermediate plate.

The unit cell may include a sulfide-based solid electrolyte.

According to this configuration, it is possible to detect that the sulfur component contained in the sulfide-based solid electrolyte reacts with moisture to generate hydrogen sulfide.

According to the present disclosure, the generation of hydrogen sulfide can be detected before the hydrogen sulfide gas fills the battery case.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically showing an overall configuration of a battery system according to the present embodiment;
FIG. 2A is a diagram illustrating a schematic configuration of a unit cell;
FIG. 2B is a diagram illustrating a schematic configuration of the unit cell;
FIG. 3A is a diagram illustrating a method of stacking the unit cells;
FIG. 3B is a diagram illustrating a method of stacking the unit cells;
FIG. 4 is a flowchart showing an example of a hydrogen sulfide generation estimation process executed by a control device; and
FIG. 5 is a diagram showing a schematic configuration of a battery module in a modification.

### DETAILED DESCRIPTION OF EMBODIMENTS

Hereinafter, embodiments of the present disclosure will be described in detail with reference to the drawings. It should be noted that the same or corresponding portions in the drawings are designated by the same reference signs and repetitive description will be omitted.

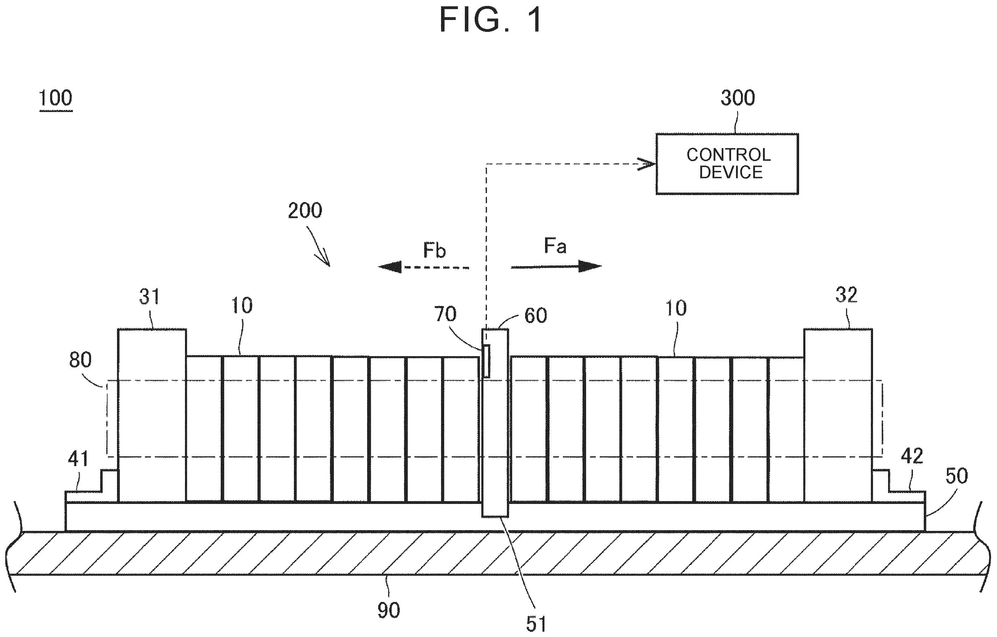

FIG. 1 is a diagram schematically showing an overall configuration of a battery system 100 according to the present embodiment. The battery system 100 includes a battery module 200 and a control device 300. The battery module 200 is an assembled battery in which a plurality of unit cells 10 is connected. The unit cells 10 are stacked between a pair of end plates 31 and 32.

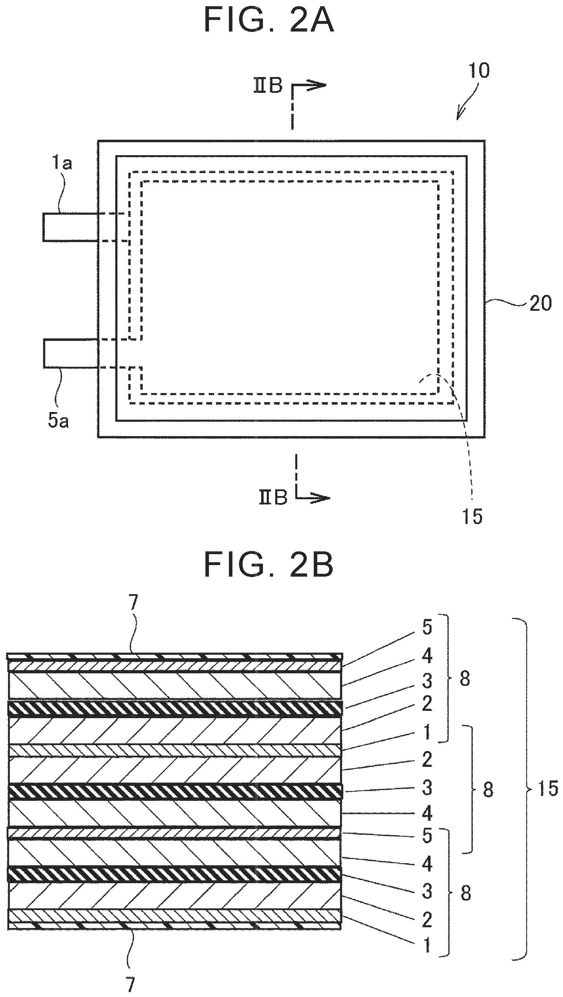

FIGS. 2A and 2B are diagrams illustrating a schematic configuration of the unit cell 10 according to the present embodiment. FIG. 2A is a top view of the unit cell 10. The unit cell 10 is a laminated all-solid-state battery using a laminate film as an exterior member 20. A negative electrode terminal (negative electrode tab) 1a and a positive electrode terminal (positive electrode tab) 5a protrude from the exterior member 20. The laminate film may be, for example, a pouch made of an aluminum laminate film, or may be a three-layer film in which an aluminum foil is sandwiched between a plurality of resin films.

FIG. 2B shows an all-solid-state battery stack 15 housed in the exterior member 20, and shows an IIB-IIB cross-section of FIG. 2A. The all-solid-state battery stack 15 includes, for example, three all-solid-state battery elements 8 in which a negative electrode current collector layer 1, a negative electrode active material layer 2, a solid electrolyte layer 3, a positive electrode active material layer 4, and a positive electrode current collector layer 5 are stacked in this order in each all-solid-state battery element 8. Three all-solid-state battery elements 8 are stacked on each other. Adjacent all-solid-state battery elements 8 share the negative electrode current collector layer 1 or the positive electrode current collector layer 5. The stacking order of the negative electrode current collector layer 1, the negative electrode active material layer 2, the solid electrolyte layer 3, the positive electrode active material layer 4, and the positive electrode current collector layer 5 is opposite in adjacent all-solid-state battery elements 8. The negative electrode current collector layer 1 is connected to the negative electrode terminal 1a. The positive electrode current collector layer 5 is connected to the positive electrode terminal 5a. Note that, the number of all-solid-state battery elements 8 included in the all-solid-state battery stack 15 may be one, or may be four or more. An insulating film 7 provides insulation between the all-solid-state battery stack 15 and the exterior member (laminate film) 20.

The unit cell 10 is a sulfide-based all-solid-state battery. In the present disclosure, a sulfide-based all-solid-state battery contains a sulfur component in at least one of the material of the positive electrode active material layer 4 and the material of the solid electrolyte layer 3. In the present embodiment, the solid electrolyte layer 3 contains a sulfide-based solid electrolyte. For example, the sulfide-based solid electrolyte may use phosphorus pentasulfide (P₂S₅) and lithium sulfide (Li₂S) as starting materials. In this case, the positive electrode active material layer 4 may contain, for example, lithium cobalt oxide, lithium nickel oxide, lithium iron phosphate, and the like. When the solid electrolyte layer 3 consists of an oxide-based solid electrolyte, the positive electrode active material layer 4 is made of a sulfur-based positive electrode active material. The sulfur-based positive electrode active material may be an organic sulfur compound or an inorganic sulfur compound. Note that both the solid electrolyte layer 3 and the positive electrode active material layer 4 may contain the sulfur component.

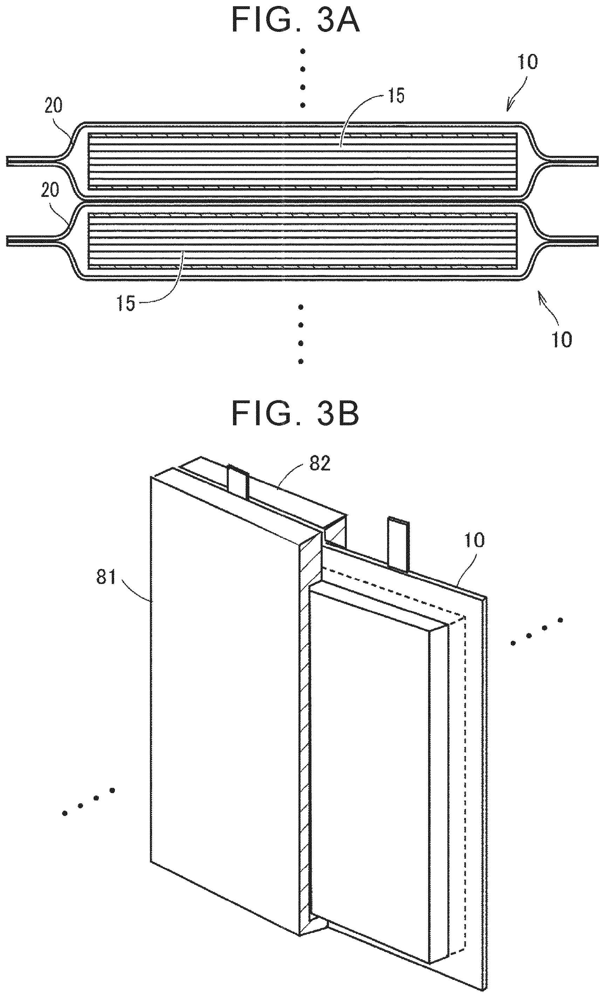

Referring to FIG. 1, the unit cells 10 are disposed and stacked between the pair of end plates 31 and 32. FIGS. 3A and 3B are diagrams illustrating a method of stacking the unit cells 10. The unit cell 10 is shaped in a flat plate, and as shown in FIG. 3A, the unit cells 10 may be stacked such that the exterior member 20 of the unit cells 10 are in contact with each other. Also, the unit cells 10 may be stacked with flat plate-shaped spacers (not shown) interposed between the unit cells 10. Note that, as shown in FIG. 3B, a pair of frame pairs 81 and 82 having inner surfaces corresponding to the outer shape of the unit cell 10 may be used to cover the unit cell 10, and the unit cells 10 covered with the pair of frame pairs 81 and 82 may be stacked with each other.

Returning to FIG. 1, an intermediate plate 60 is disposed between the unit cell 10 and the unit cell 10 at the central portion in the stacking direction of the unit cells 10. The unit cells 10 and the intermediate plate 60 are sandwiched between the pair of end plates 31 and 32 in a stacked state. A predetermined binding load is applied to the unit cells 10, the intermediate plate 60, and the pair of end plates 31 and 32 by a binding band 80, for example. The pair of end plates 31 and 32 is fixed to a bottom plate 50 by brackets 41 and 42. Note that, the pair of end plates 31 and 32 is an example of "a pair of restraining members" in the present disclosure.

In the present embodiment, the intermediate plate 60 is fixed by being fitted into a groove 51 formed in the bottom plate 50. Thereby, the intermediate plate 60 is fixed to the bottom plate 50 in a cantilevered state.

A strain gauge 70 is provided on the intermediate plate 60. The strain gauge 70 may be a foil strain gauge or a semiconductor strain gauge. The strain gauge 70 detects a bending strain of the intermediate plate 60.

The battery module 200 includes the unit cells 10 and the intermediate plate 60, which are stacked between the pair of end plates 31 and 32, the bottom plate 50, and the like. The battery module 200 is fixed to a battery case 90. The battery case 90 is a housing that accommodates the battery module 200.

The control device 300 includes a processor such as a central processing unit (CPU), a memory such as a read only memory (ROM) and a random access memory (RAM), an input/output port, and the like, and controls charging and discharging of the battery module 200. In the present embodiment, the control device 300 estimates the generation of hydrogen sulfide (H₂S) in the unit cell 10 based on a detection signal of the strain gauge 70. The control device 300 functions as an "estimation unit" of the present disclosure.

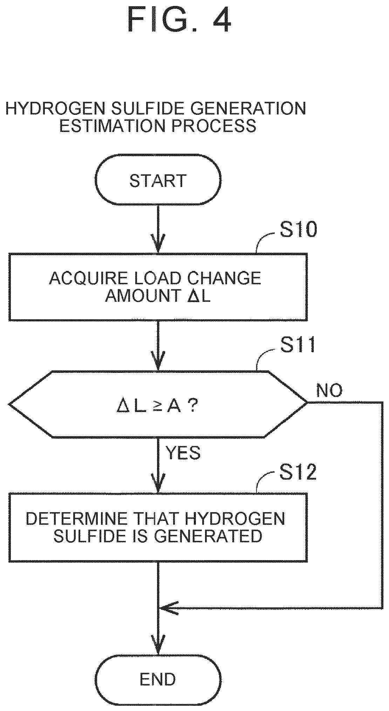

FIG. 4 is a flowchart showing an example of a hydrogen sulfide generation estimation process executed by the control device 300. This flowchart is repeatedly processed every predetermined period. First, in step (hereinafter abbreviated as "S") 10, based on the detection signal of the strain gauge 70, a change amount of the load L (load change amount) ΔL applied to the intermediate plate 60 is acquired.

In any one of the unit cells 10 of the battery module 200, for some reason, when the sulfur component contained in the solid electrolyte layer 3 or the positive electrode active material layer 4 reacts with moisture to generate hydrogen sulfide, a volume of the unit cell 10 increases by the gas pressure. When the volume of the unit cell 10 increases, the load applied to the intermediate plate 60 changes. In FIG. 1, when hydrogen sulfide is generated in the unit cell 10 on the left side of the intermediate plate 60, a force Fa acts on the intermediate plate 60 in the direction indicated by a continuous line arrow. In FIG. 1, when hydrogen sulfide is generated in the unit cell 10 on the right side of the intermediate plate 60, a force Fb acts on the intermediate plate 60 in the direction indicated by a dotted line arrow.

When the force Fa or the force Fb acts on the intermediate plate 60, a bending moment is applied to the intermediate plate 60, and the bending strain is detected by the strain gauge 70. In S10, a magnitude of this bending strain is acquired as the load change amount ΔL applied to the intermediate plate 60.

In subsequent S11, it is determined whether the load change amount ΔL is equal to or greater than a predetermined value A. When the load change amount ΔL is less than the predetermined value A, a negative determination is made (S11: NO), and the current routine ends. When the load change amount ΔL is equal to or greater than the predetermined value A, a positive determination is made (S11: YES), and the process proceeds to S12. Note that the predetermined value A is set in advance by experiments and the like.

In S12, it is determined that hydrogen sulfide is generated in the unit cell 10, and the current routine ends. Note that, in S12, by determining whether the bending strain detected by the strain gauge 70 is in the direction of compression or in the direction of tension, an arrangement position of the unit cell 10 where hydrogen sulfide is generated can also be identified. For example, as shown in FIG. 1, in the case where the strain gauge 70 is provided on the left side surface of the intermediate plate 60, the strain gauge 70 outputs the detection signal in the direction of tension (elongation direction) when the force Fa acts on the intermediate plate 60, and the strain gauge 70 outputs the detection signal in the direction of compression (contraction direction) when the force Fb acts on the intermediate plate 60. Therefore, when the detection signal of the strain gauge 70 is in the direction of tension, it can be determined that hydrogen sulfide is generated in any one of the unit cells 10 on the left side of the intermediate plate 60. When the detection signal of the strain gauge 70 is in the direction of compression, it can be determined that hydrogen sulfide is generated in any one of the unit cells 10 on the right side of the intermediate plate 60.

According to the present embodiment, the change in the load applied to the intermediate plate 60 is detected by the bending strain detected by the strain gauge 70 provided on the intermediate plate 60 disposed between the stacked unit cells 10. Since the generation of hydrogen sulfide in the unit cell 10 is estimated based on the change in the load applied to the intermediate plate 60, hydrogen sulfide generated in the unit cell 10 can be detected before the battery case 90 is filled with hydrogen sulfide.

In the present embodiment, the pair of end plates 31 and 32 and the intermediate plate 60 are fixed to the bottom plate 50. However, the pair of end plates 31 and 32 and the intermediate plate 60 may be directly fixed to the battery case 90. Modifications

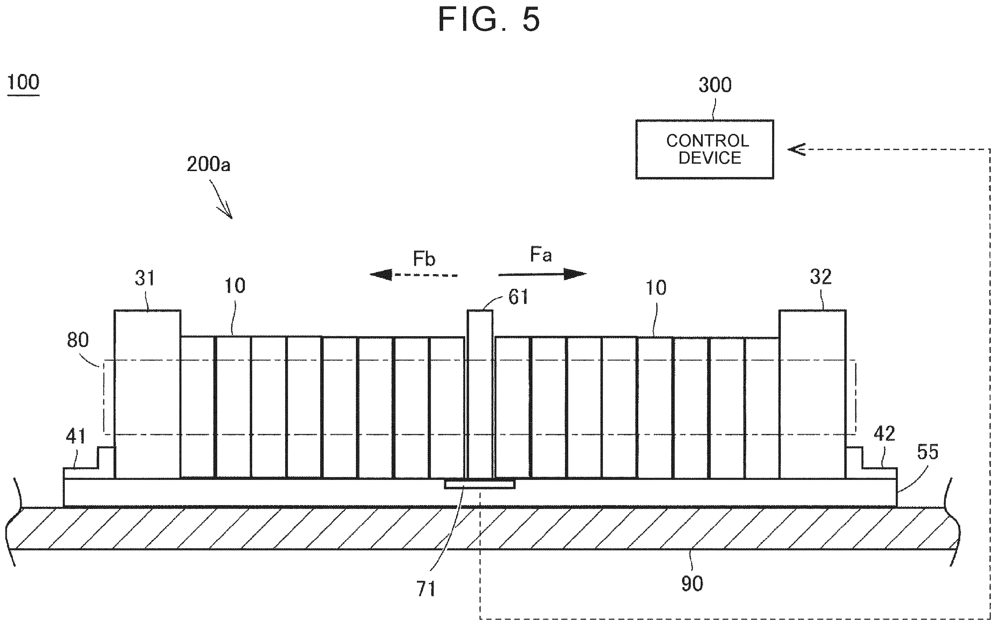

FIG. 5 is a diagram showing a schematic configuration of a battery module 200a in a modification. In the battery module 200a, an intermediate plate 61 located in the central portion of a plurality of stacked unit cells 10 is not fixed to a bottom plate 55. Therefore, the intermediate plate 61 can be displaced (or moved) in the stacking direction of the unit cells 10. A displacement sensor (displacement gauge) 71 is provided in a portion of a bottom plate 55 facing the intermediate plate 61. The displacement sensor 71 may be a variable resistance displacement sensor of which resistance changes according to the displacement of the intermediate plate 61, or may be a non-contact linear displacement sensor using the Hall effect.

In the modification as well, generation of hydrogen sulfide in the unit cell 10 is estimated by a process shown in the flowchart of FIG. 4. In the modification, in S10, a change amount of the load L (load change amount) ΔL applied to the intermediate plate 61 is acquired based on a detection signal of the displacement sensor 71.

In any one of the unit cells 10 of the battery module 200, for some reason, when the sulfur component contained in a solid electrolyte layer 3 or a positive electrode active material layer 4 reacts with moisture to generate hydrogen sulfide, a volume of the unit cell 10 increases by gas pressure. As the volume of the unit cell 10 increases, the load applied to the intermediate plate 61 changes. In FIG. 5, when hydrogen sulfide is generated in the unit cell 10 on the left side of the intermediate plate 61, a force Fa acts on the intermediate plate 61 in the direction indicated by a continuous line arrow. In FIG. 5, when hydrogen sulfide is generated in the unit cell 10 on the right side of the intermediate plate 61, a force Fb acts on the intermediate plate 61 in the direction indicated by a dotted line arrow.

When the force Fa or the force Fb acts on the intermediate plate 61, the intermediate plate 61 is displaced in the stacking direction of the unit cells 10, and thus the displacement of the intermediate plate 61 is detected by the displacement sensor 71. In S10, a magnitude of this displacement is acquired as the load change amount ΔL applied to the intermediate plate 61. The processes of S11 and S12 are the same as in the above embodiment.

In S12, based on the direction of displacement detected by the displacement sensor 71, it is also possible to identify an arrangement position of the unit cell 10 where hydrogen sulfide is generated. For example, in FIG. 5, when a force Fa acts on the intermediate plate 61 and the intermediate plate 61 is displaced rightward, it can be determined that hydrogen sulfide is generated in any one of the unit cells 10 on the left side of the intermediate plate 61. Also, in FIG. 5, when a force Fb acts on the intermediate plate 61 and the intermediate plate 61 is displaced leftward, it can be determined that hydrogen sulfide is generated in any one of the unit cells 10 on the right side of the intermediate plate 61.

Also in this modification, the change in the load applied to the intermediate plate 61 is detected from the displacement detected by the displacement sensor 71 that detects the displacement of the intermediate plate 61 disposed between the stacked unit cells 10. Since the generation of hydrogen sulfide in the unit cell 10 is estimated based on the change in the load applied to the intermediate plate 61, hydrogen sulfide generated in the unit cell 10 can be detected before the battery case 90 is filled with hydrogen sulfide.

In the above embodiment and modification, the intermediate plate 60 including the strain gauge 70 or a combination of the intermediate plate 61 and the displacement sensor 71 is provided at the central portion in the stacking direction of the unit cells 10. However, these positions are not limited to the central portion. A plurality of intermediate plates 60 may be disposed, for example, at equal intervals in the stacking direction of the unit cells 10. Alternatively, a plurality of combinations of the intermediate plate 61 and the displacement sensor 71 may be disposed at equal intervals in the stacking direction of the unit cells 10, for example. Moreover, both the intermediate plate 60 provided with the strain gauge 70 and the combination of the intermediate plate 61 and the displacement sensor 71 may be provided in one battery module with a space therebetween.

Note that the battery system 100 may be mounted on an electrified vehicle or may be stationary.

The embodiment disclosed herein should be considered as illustrative and not restrictive in all respects. The scope of the present disclosure is shown by the claims, rather than the above embodiments, and is intended to include all modifications within the meaning and the scope of the claims.

## Claims

1. A battery system (100) comprising:
a unit cell (10) that is a sulfide-based all-solid-state battery;
a battery module (200; 200a) in which a plurality of the unit cells (10) is stacked between a pair of restraining members (31, 32);
an intermediate plate (60; 61) disposed between the stacked unit cells (10);
a detection unit configured to detect a load applied to the intermediate plate (60; 61); and
an estimation unit (300) configured to estimate generation of hydrogen sulfide in the unit cell (10) based on a change in the load applied to the intermediate plate (60; 61).

2. The battery system (100) according to claim 1, wherein:
the intermediate plate (60) is fixed to a base member (50) in a cantilevered state, the restraining members (31, 32) being fixed to the base member (50); and
the detection unit is a strain gauge (70) provided on the intermediate plate (60).

3. The battery system (100) according to claim 2, wherein the estimation unit (300) is configured to determine a direction of a bending strain detected by the strain gauge (70), and based on a relationship between the direction of the bending strain and a position of the intermediate plate (60) in a stacking direction of the unit cells (10), identify an arrangement position of the unit cell (10) where hydrogen sulfide is generated.

4. The battery system (100) according to claim 1, wherein:
the intermediate plate (61) is configured to be displaced in a stacking direction of the unit cells (10); and
the detection unit is a sensor (71) that detects displacement of the intermediate plate (61).

5. The battery system (100) according to claim 4, wherein the estimation unit (300) is configured to determine a direction of the displacement of the intermediate plate (61) detected by the sensor (71), and based on a relationship between the direction of the displacement of the intermediate plate (61) and a position of the intermediate plate (61) in the stacking direction of the unit cells (10), identify an arrangement position of the unit cell (10) where hydrogen sulfide is generated.

6. The battery system (100) according to any one of claims 1 to 5, wherein the unit cell (10) is a laminated all-solid-state battery including a laminate film as an exterior member (20).

7. The battery system (100) according to claim 6, wherein the unit cell (10) includes a sulfide-based solid electrolyte.

## Patentansprüche

1. Batteriesystem (100), das Folgendes umfasst:
eine Einheitszelle (10), die eine reine Feststoffbatterie auf Sulfidgrundlage ist;
ein Batteriemodul (200; 200a), in dem mehrere Einheitszellen (10) zwischen einem Paar von Halteelementen (31, 32) gestapelt sind;
eine Zwischenplatte (60; 61), die zwischen den gestapelten Einheitszellen (10) angeordnet ist;
eine Detektionseinheit, die konfiguriert ist, eine auf die Zwischenplatte (60; 61) ausgeübte Last zu detektieren; und
eine Schätzeinheit (300), die konfiguriert ist, auf der Grundlage einer Änderung der auf die Zwischenplatte (60; 61) ausgeübten Last die Erzeugung von Schwefelwasserstoff in der Einheitszelle (10) zu schätzen.

2. Batteriesystem (100) nach Anspruch 1, wobei:
die Zwischenplatte (60) in einem einseitig angelenkten Zustand an einem Basiselement (50) befestigt ist, die Halteelemente (31, 32) an dem Basiselement (50) befestigt sind; und
die Detektionseinheit ein an der Zwischenplatte (60) vorgesehener Dehnungsmesser (70) ist.

3. Batteriesystem (100) nach Anspruch 2, wobei die Schätzeinheit (300) konfiguriert ist, eine durch den Dehnungsmesser (70) detektierte Richtung einer Biegeverformung zu bestimmen und auf der Grundlage einer Beziehung zwischen der Richtung der Biegeverformung und einer Position der Zwischenplatte (60) in einer Stapelrichtung der Einheitszellen (10) eine Anordnungsposition der Einheitszelle (10), wo Schwefelwasserstoff erzeugt wird, zu identifizieren.

4. Batteriesystem (100) nach Anspruch 1, wobei:
die Zwischenplatte (61) konfiguriert ist, in einer Stapelrichtung der Einheitszellen (10) verlagert zu werden; und
die Detektionseinheit ein Sensor (71) ist, der die Verlagerung der Zwischenplatte (61) detektiert.

5. Batteriesystem (100) nach Anspruch 4, wobei die Schätzeinheit (300) konfiguriert ist, eine durch den Sensor (71) detektierte Richtung der Verlagerung der Zwischenplatte (61) zu bestimmen und auf der Grundlage einer Beziehung zwischen der Richtung der Verlagerung der Zwischenplatte (61) und einer Position der Zwischenplatte (61) in der Stapelrichtung der Einheitszellen (10) eine Anordnungsposition der Einheitszelle (10), wo Schwefelwasserstoff erzeugt wird, zu identifizieren.

6. Batteriesystem (100) nach einem der Ansprüche 1 bis 5, wobei die Einheitszelle (10) eine geschichtete reine Feststoffbatterie, die einen Schichtstoff als ein Außenelement (20) enthält, ist.

7. Batteriesystem (100) nach Anspruch 6, wobei die Einheitszelle (10) einen Festelektrolyten auf Sulfidgrundlage enthält.

## Revendications

1. Système de batterie (100) comprenant :
une cellule unitaire (10) constituant une batterie tout solide à base de sulfure ;
un module de batterie (200 ; 200a) dans lequel une pluralité de cellules unitaires (10) sont empilées entre une paire d'éléments de retenue (31, 32) ;
une plaque intermédiaire (60 ; 61) disposée entre les cellules unitaires (10) empilées ;
une unité de détection configurée pour détecter une charge appliquée à la plaque intermédiaire (60 ; 61) ; et
une unité d'estimation (300) configurée pour estimer la génération de sulfure d'hydrogène dans la cellule unitaire (10) sur la base d'une variation de la charge appliquée à la plaque intermédiaire (60 ; 61).

2. Système de batterie (100) selon la revendication 1, dans lequel :
la plaque intermédiaire (60) est fixée à un élément de base (50) en porte-à-faux, les éléments de retenue (31, 32) étant fixés à l'élément de base (50) ; et
l'unité de détection est une jauge de déformation (70) placée sur la plaque intermédiaire (60).

3. Système de batterie (100) selon la revendication 2, dans lequel l'unité d'estimation (300) est configurée pour déterminer une direction d'une déformation de flexion détectée par la jauge de déformation (70) et, sur la base d'une relation entre la direction de la déformation de flexion et une position de la plaque intermédiaire (60) dans une direction d'empilement des cellules unitaires (10), identifier une position d'agencement de la cellule unitaire (10) où du sulfure d'hydrogène est généré.

4. Système de batterie (100) selon la revendication 1, dans lequel :
la plaque intermédiaire (61) est configurée pour être déplacée dans une direction d'empilement des cellules unitaires (10) ; et
l'unité de détection est un capteur (71) qui détecte un déplacement de la plaque intermédiaire (61).

5. Système de batterie (100) selon la revendication 4, dans lequel l'unité d'estimation (300) est configurée pour déterminer une direction du déplacement de la plaque intermédiaire (61) détecté par le capteur (71) et, sur la base d'une relation entre la direction du déplacement de la plaque intermédiaire (61) et une position de la plaque intermédiaire (61) dans la direction d'empilement des cellules unitaires (10), identifier une position d'agencement de la cellule unitaire (10) où du sulfure d'hydrogène est généré.

6. Système de batterie (100) selon l'une quelconque des revendications 1 à 5, dans lequel la cellule unitaire (10) est une batterie tout solide stratifiée comportant un film multicouche formant un élément extérieur (20).

7. Système de batterie (100) selon la revendication 6, dans lequel la cellule unitaire (10) comporte un électrolyte solide à base de sulfure.
